# EUROPEAN PATENT SPECIFICATION

(11) **EP 1 170 744 B1**
(45) Date of publication and mention of the grant of the patent: **16.04.2008**
(21) Application number: 01401716.4
(22) Date of filing: 27.06.2001
(51) Int. Cl.: G11B 19/12

(54) **Method for quickly configuring an optical recording and reproducing apparatus and an apparatus using the same**
Verfahren zur Schnellkonfiguration eines optischen Aufzeichnungs- und Wiedergabegeräts und Gerät dazu
Méthode de configuration rapide d'un appareil d'enregistrement et de reproduction optique et appareil associé

(30) Priority: 05.07.2000 DE 10032034
(43) Date of publication of application: 09.01.2002
(73) Proprietor: Thomson Licensing, 92100 Boulogne-Billancourt (FR)
(72) Inventor: Uhde, Dietmar, 78126 Königsfeld (DE); Büchler, Christian, 78052 Villingen-Schwenningen (DE)
(74) Representative: Thies, Stephan

(56) References cited:
- EP-A- 0 442 566
- GB-A- 2 332 977
- US-A- 5 502 702

## Description

The present invention relates to a method for quickly producing read and/or write readiness of an apparatus for reading from and/or writing to an optical recording medium, and a correspondingly configured apparatus for reading from and/or writing to an optical recording medium.

After an optical recording medium has been inserted into a corresponding apparatus for reading from and/or writing to this optical recording medium, the optical recording medium can be accessed only after a certain waiting time. This waiting time, which may last for tens of seconds for example in the case of DVD-ROM or DVD-Video, is down to the fact that firstly diverse adjustment steps have to be carried out in order to prepare the apparatus for reliable reading from and/or writing to the respective optical recording medium.

The adjustment steps to be carried out during this waiting or adjustment time depend, in particular, on the type of optical recording medium used in each case. The more different types of optical recording media there are, and the more different types the respectively used apparatus can read from and/or write to, the longer this adjustment time lasts. Therefore, there is in principle a need to shorten this adjustment time as far as possible.

JP 07-192386 describes a CD player, an identification code of a CD-ROM that has been inserted into the CD player being read and compared with the data stored in a RAM memory. If correspondence is ascertained in this way, setting data that are likewise stored in the RAM memory are read out and used for starting the system. The setting data are setting information items which a user can select during normal operation of the CD player via a menu-controlled interface. In this way, by way of example, menu configurations or game statuses which were created e.g. for a game - contained on a CD-ROM - for a personal computer (PC) can be reloaded, so that these menu configurations or game statuses do not have to be created anew and the start of the overall system after the power supply has been switched on can be accelerated. Individual identification of the CD-ROM does not take place, however, since, by way of example, all CD-ROMs with the same computer game must have the same identification code.

Moreover, US 4,872,151 proposes reading an identification code of a compact disc (CD) and comparing it with the identification code already stored in a storage device. If correspondence is ascertained, an order - already stored together with the identification code - for the reproduction of the titles contained on the CD can be loaded and the reproduction of the CD can be carried out in accordance with this loaded order. However, with this procedure, too, individual identification of the CD does not take place, since, by way of example, all CDs with the same titles must have the same identification code.

Finally, DE 31 39 543 A1 proposes a system for automatically controlling record players, an optoelectronic information item being printed on the periphery of the label of a record, the said information item containing record-specific data in the form of a bar code. This optoelectronic information item may comprise data which define for example the speed of revolution, so that reading of this optoelectronic information item enables the automatic control of various record player functions. However, individual identification of the respective record is not possible with the aid of this optoelectronic information item, since, by way of example, all records of a specific title are printed identically.

EP-A-0 442 566 describes an information recording device having adjustable write means, which requires less time to determine the optimum adjustment of the write means. Identification information items of optical disks are detected after insertion or mounting, in order to identify the disk; it is checked whether, for the identified disk, adjustment parameter values are stored; in case of which the adjustment parameter values are used to adjust the device.

GB-A-2 332 977 describes a method for discriminating the type of a disk mounted into an optical disk player, and an optical disk player for enabling rapid and accurate discrimination of the disk type. Identification information items of optical disks are detected after mounting, in order to identify the disk type. US-A-4 989195 describes a method for producing read readiness according to the preamble of claim 1, wherein the type of disk mounted into the optical disk player is discriminated.

The present invention is based on the object of proposing a method for quickly producing read and/or write readiness of an apparatus for reading from and/or writing to an optical recording medium, and a correspondingly configured apparatus, it being possible to shorten the previously mentioned waiting or adjustment time after the insertion of the optical recording medium into the apparatus.

This object is achieved according to the invention by means of a method and an apparatus having the features of the respective independent claims. The subclaims each define preferred and advantageous embodiments of the present invention.

The invention can generally be applied to optical recording media which can be distinguished using individually stored features or identification information items. This is true, in particular, of DVD-ROM media, since the latter often have a "BCA code" ("Burst Cutting Area") which is individually allocated for each medium or each recording medium. After the uniform production of a series of discs, the "Burst Cutting Area" is applied by a burning operation into a specific area of the individual disc. This BCA data area is normally provided for identification and authorization of the disc. Since this BCA data area uniquely identifies a disc, this BCA data area can be used for individual recognition of the corresponding disc.

According to the invention, after the insertion of the recording medium, the corresponding identification information of the respective recording medium is detected in order to identify the recording medium. A check is then made to determine whether, for the identified recording medium, adjustment parameter values for operation of the apparatus are stored in a storage device. If this is the case, the adjustment parameter values are read from the storage device and used for adjusting the apparatus, with the result that read and/or write readiness of the apparatus can be rapidly produced.

If the recording medium is inserted into the apparatus for the first time, however, it is not possible to ascertain such adjustment parameter values in the storage device. Therefore, the customary adjustment procedure must be carried out in order to set for example the parameters "focus gain", "focus offset", "track gain", "track offset" or "HF gain" and to prepare the apparatus for reliably reading from and/or writing to the optical recording medium. Afterwards, the list of contents of the recording medium can be read and the first access can be made to a data area prescribed by the respective user. The values - set for the recording medium that has been inserted into the apparatus for the first time - of the previously mentioned adjustment parameters and also, if appropriate, of further control or regulating circuit parameters or of other parameters specific to the individual recording medium are stored together with the corresponding identification information items or individual features of the recording medium, so that when the recording medium is reinserted into the apparatus, they can be read out in the manner previously described and be used for rapidly producing read and/or write readiness of the apparatus.

The adjustment parameter values are stored for example in a non-volatile memory within the apparatus or, in the case of an apparatus connected to another device as e.g. to a personal computer (PC), in a configuration file outside the apparatus. In accordance with a variant of the present invention, the list with the known recording media, together with the corresponding adjustment parameter values, can be stored as a non-volatile file on the hard disk of a PC and, in the event of switch-on of the PC and the subsequent initialization of the built-in read and/or write apparatus, can be accepted into a volatile memory of the corresponding apparatus, so that a data exchange between the apparatus and the hard disk of the PC is not necessary every time a recording medium is inserted into the read and/or write apparatus.

It is particularly advantageous if the content of the BCA data area is read as the identification information which individually identifies the respective recording medium, since this BCA data area comprises relatively coarse structures and can be read very easily by a read apparatus. For this purpose, all that is necessary is for the objective lens of the playback apparatus to be coarsely focused by the focus regulation. Track regulation is not necessary since the BCA information is very large in relation to the scanning beam and lies on a specific diameter of the recording medium. Thus, prior to the reading of the BCA information, it is not necessary to adjust the focus offset or any parameters of the track regulation.

Rather, it is necessary merely for that diameter of the recording medium which comprises the BCA information to be touched by the scanning beam. This is expediently done by displacing the optical scanner into a position which is predetermined for the BCA information or another information item which identifies the individual recording medium.

In order to recognize the inserted recording medium, it is also possible, however, to use other identification features provided that the latter enable the individual recording media to be individually distinguished. Thus, by way of example, the list of contents of the inserted recording medium can also be used as an identification feature, since it is unlikely that a user will have a plurality of recording media having the same content. Individualization of the recording medium can, for example, also be effected via the detection of a printed-on label, for example a bar coding, provided that this is correspondingly unique. Detecting an electrical or magnetic detectable individualization information item also lies within the scope of the invention.

According to the invention, then, the adjustment parameter values for each individual optical recording medium are determined only once, namely when the said recording medium is inserted into the read and/or write apparatus for the first time. When the same recording medium is re-inserted, the adjustment parameter values that have already been determined previously can be read from a storage device and be used for accelerated adjustment. In this way, the waiting time which is necessary after the insertion of an optical recording medium until access to the optical recording medium can be distinctly reduced.

The present invention is explained in more detail below using preferred exemplary embodiments with reference to the accompanying drawings.
- Fig. 1: shows a simplified block diagram of a DVD-ROM read apparatus in accordance with a first exemplary embodiment of the present invention, and
- Fig. 2: shows a simplified block diagram of a DVD-ROM read apparatus in accordance with a second exemplary embodiment of the present invention.

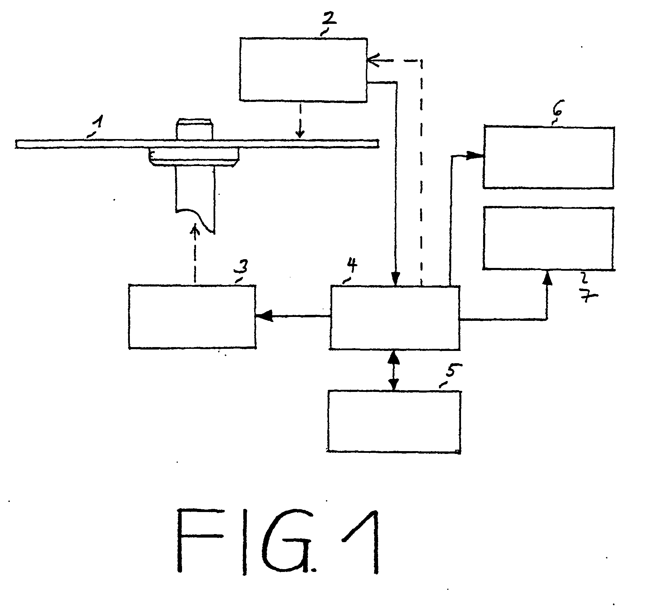

Figure 1 illustrates an optical recording medium 1, a DVD-ROM disc in the example illustrated, which is made to rotate by a drive unit 3. After the insertion of the DVD-ROM disc 1, the "BCA data area" of the DVD-ROM disc 1 is read by an optical read unit 2. This BCA data area uniquely identifies the respectively inserted DVD-ROM disc 1, so that the respectively inserted DVD-ROM disc 1 can be individually inferred by evaluation of the BCA data area. The use of the BCA data area for identifying the DVD-ROM disc 1 is advantageous since this comprises relatively coarse structures and can be read very easily by the read apparatus. All that is necessary is for the objective lens of the optical read unit 2 to be coarsely focused by corresponding focus regulation, while track regulation is not necessary since the BCA data area is very large in relation to the scanning beam of the optical read unit and lies in a specific diameter region of the DVD-ROM disc 1. Consequently, the scanning beam of the optical read unit 2 merely has to be moved to this specific diameter region of the DVD-ROM disc 1, preferably into the centre of the said region.

After the reading of the BCA data area, the data read by the optical read unit 2 are communicated to a control unit 4, which uses the read data of the BCA data area to identify the DVD-ROM disc 1 that has been inserted into the apparatus. Furthermore, the control unit 4 accesses a non-volatile memory 5 and checks whether adjustment parameter values that have already been determined during a previous adjustment operation are stored for the identified DVD-ROM disc 1.

If this is not the case, i.e. if the DVD-ROM disc 1 has been inserted into the read apparatus for the first time, an adjustment operation that is customary per se must be carried out in order to prepare the optical read unit 2 for reliable reading of the DVD-ROM disc 1. In this case, diverse adjustment steps have to be performed in order to set control or regulating circuit parameters, for example, for the focus or tracking regulation, the parameters "focus gain", "focus offset", "track gain", "track offset" or "HF gain" of the optical read unit 2, to values which are as optimal as possible for reading the DVD-ROM disc 1. Afterward, the list of contents of the DVD-ROM disc 1 can be read by the optical read unit 2 and a first access can be made to a data area prescribed by the user. The individual features or identification information items of the BCA data area which identify the identified DVD-ROM disc 1 are stored together with the values - set by the control unit 4 - of the previously mentioned adjustment parameters in the non-volatile memory 5, so that, in the event of repeated use of the same DVD-ROM disc 1, they can be used in the manner described below for accelerated adjustment of the optical read unit 2.

In the event of repeated use of the DVD-ROM disc 1, the control unit 4 will ascertain from the identification information items read, by means of a comparison with the list of already known discs which is stored in the memory 5, that the same DVD-ROM disc 1 has already been identified previously and the optical read unit 2 has been correspondingly adjusted. The control unit 4 thereupon reads out the adjustment parameter values stored for the identification information items of the corresponding DVD-ROM disc 1 in the memory 5 and uses them as start values for the adjustment of the optical read unit 2. It may be possible for the adjustment also to be entirely obviated and to begin immediately with the reading of the data required by the user, as a result of which the access to the DVD-ROM disc 1 can be further accelerated. In this case, the start values matched according to the invention to the respective individual recording medium are so close to the actually optimal values that the time according to the invention for the adjustment is shortened even when the start values are still adjusted in an optimized manner.

In the exemplary embodiment shown in Figure 1, the output units illustrated are a display unit 6 and also a loudspeaker 7, via which the information of the DVD-ROM disc 1 read by the optical read unit 2 can be reproduced. In addition to audio and video information, general data can also be stored on the DVD-ROM disc 1, which data are forwarded to corresponding evaluation units.

It goes without saying that the apparatus shown in Figure 1 need not exclusively be a read apparatus, rather, instead of the optical read unit 2, it is also possible to use a combined optical write/read unit or just an optical write unit, so that it is possible to write to and/or read from the optical recording medium 1 used in each case.

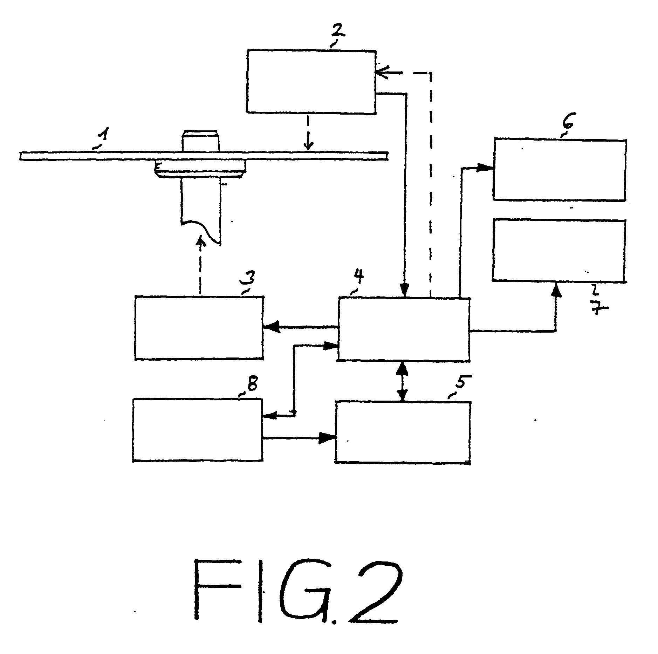

A second exemplary embodiment of the present invention is illustrated in Figure 2, the components corresponding to the components shown in Figure 1 being provided with the same reference symbols.

In the exemplary embodiment shown in Figure 2, the DVD-ROM read apparatus illustrated is connected to a personal computer (PC). What is used as non-volatile memory for the identification information items of already identified DVD-ROM discs 1 and/or for the corresponding adjustment parameter values is a configuration file of the PC, which is stored for example on the hard disk 8 of the PC. The control unit 4 can access this configuration file of the hard disk 8 at any time in order to ascertain whether, for an identified DVD-ROM disc 1, adjustment parameter values have already been previously determined and stored. If this is the case, the adjustment parameter values stored for the identification information items read are loaded and used for adjusting the optical read unit 2. In the other case, the previously described adjustment steps must be performed and the adjustment parameter values determined in the process must be stored together with the identification information items of the inserted DVD-ROM disc 1 in the configuration file of the hard disk 8.

Since every access to the hard disk 8 by the control unit 4 can last several milliseconds, it is advantageous if the memory 5 already shown in Figure 1 is additionally used, in which case, in the exemplary embodiment shown in Figure 2, the memory 5 can also be configured as a volatile memory. When the PC is switched on, the content of the configuration file of the hard disk 8 is accepted into the volatile memory 5 of the DVD-ROM read apparatus, so that the control unit 4 can subsequently carry out the checking of the list of already known DVD-ROM discs 1 by accessing the memory 5. Consequently, a data exchange between the read apparatus and the hard disk 8 is not necessary every time a new DVD-ROM disc 1 is inserted.

## Claims

1. Method for quickly producing read readiness of an apparatus for reading from or for reading from and writing to an optical recording medium, the recording medium (1) having identification information items which individually identify the respective recording medium, comprising the steps of:
a) detecting the identification information items of the recording medium (1) after the latter has been inserted into the apparatus, in order to individually identify the recording medium,
b) checking whether, for the individually identified recording medium (1), at least one adjustment parameter value for operation of the apparatus is stored in storage means (5, 8), and
c) reading of the adjustment parameter value from the storage means (5, 8), if the check made in step b) is positive, and adjusting the apparatus in accordance with the adjustment parameter value read, in order to be able to read from a data area of the recording medium (1),
**characterised in that** the identification information is being detected after coarse focusing and before adjustment procedures related to adjustment parameters for focus or tracking of the apparatus are performed.

2. Method according to Claim 1, **characterized in that** in the case where the check made in step b) is negative, adjustment procedures related to adjustment parameters for focus or tracking of the apparatus are performed, and afterwards, for the identified recording medium (1), at least one adjustment parameter value for focus or tracking of the apparatus corresponding to the adjusted state of the apparatus is stored in the storage means (5, 8).

3. Method according to Claim 1 or 2, **characterized in that** a non-volatile memory (5) of the apparatus or a file stored on a non-volatile data carrier (8) is used as storage means.

4. Method according to Claim 3, **characterized in that** the non-volatile data carrier (8) is provided externally to the apparatus, and **in that** the content of the file of the non-volatile data carrier (8) is accepted into a memory (5) which is provided in the apparatus and is accessed in steps b) and c).

5. Method according to one of the preceding claims, **characterized in that**, in step a), a BCA data area of the optical recording medium (1) is read as identification information.

6. Apparatus for reading from or for reading from and writing to an optical recording medium,
the recording medium (1) having identification information items which individually identify the respective recording medium,
the apparatus having detection means (2) for detecting the identification information items of a recording medium (1) that has been inserted into the apparatus,
the apparatus having storage means (5, 8) and control means (4) for individually identifying the recording medium (1) that has been inserted into the apparatus using the detected identification information items, and for checking whether, for the individually identified recording medium (1), at least one adjustment parameter value for focus or tracking of the apparatus is stored in the storage means (5, 8),
the control means (4) being configured in such a way that, in the case where, for the identified recording medium (1) an adjustment parameter value has been able to be identified in the storage means (5, 8), the said control means read the adjustment parameter value from the storage means (5, 8) and adjust read means (2) of the apparatus in accordance with the adjustment parameter value read, in order to be able to read from a data area of the recording medium (1) via the read means (2),
**characterised in that** the detection means are equipped to detect the identification information after coarse focusing and before adjustment procedures related to adjustment parameters for focus or tracking are performed.

7. Apparatus according to Claim 6, **characterized in that** the detection means are formed by the read means (2).

8. Apparatus according to Claims 6 or 7, **characterized in that** the control means (4) are configured in such a way that, in the case where, for the identified recording medium (1), it has not been possible to identify an adjustment parameter value in the storage means (5, 8), the said control means carry out an adjustment of the read means (2) and, for the identified recording medium (1), store in the storage means (5, 8) at least one adjustment parameter value corresponding to the adjusted state of the read means (2).

9. Apparatus according to one of Claims 6-8,
**characterized in that** the storage means comprise a non-volatile memory (5) of the apparatus or a non-volatile data carrier (8) provided externally to the apparatus.

10. Apparatus according to one of Claims 6-9, **characterized in that** the detection means (2) are configured in such a way that they read a BCA data area of the recording medium (1) as the identification information items which individually identify the recording medium (1) that has been inserted into the apparatus.

11. Apparatus according to one of Claims 6-10,
**characterized in that** the apparatus is configured for reading from a DVD-ROM disc (1) as optical recording medium.

## Patentansprüche

1. Verfahren zum schnellen Herstellen der Lesebereitschaft eines Geräts zum Lesen oder zum Lesen und Beschreiben eines optischen Aufzeichnungsträgers,
wobei der Aufzeichnungsträger (1) den jeweiligen Aufzeichnungsträger individuell kennzeichnende Identifizierungsinformationen aufweist,
umfassend die Schritte:
a) Erfassen der Identifizierungsinformationen des Aufzeichnungsträgers (1) nach dessen Einlegen in das Gerät, um den Aufzeichnungsträger individuell zu identifizieren,
b) Überprüfen, ob zu dem individuell identifizierten Aufzeichnungsträger (1) in Speichermitteln (5, 8) mindestens ein Abgleichparameterwert für den Betrieb des Geräts gespeichert ist, und
c) Auslesen des Abgleichparameterwerts aus den Speichermitteln (5, 8), falls die im Schritt b) durchgeführte Überprüfung positiv ist, und Abgleichen des Geräts entsprechend dem ausgelesenen Abgleichparameterwert, um einen Datenbereich des Aufzeichnungsträgers (1) lesen zu können,
**dadurch gekennzeichnet, daß** die Identifizierungsinformation nach grober Fokussierung und vor Durchführung der Abgleichvorgänge bezüglich der Abgleichparameter für Fokus oder Spur des Geräts erfaßt wird.

2. Verfahren nach Anspruch 1,
**dadurch gekennzeichnet, daß** für den Fall, daß die in Schritt b) durchgeführte Überprüfung negativ ist, Abgleichvorgänge bezüglich der Abgleichparameter für Fokus oder Spur des Geräts durchgeführt werden und anschließend für den identifizierten Aufzeichnungsträger (1) mindestens ein dem abgeglichenen Zustand des Geräts entsprechender Abgleichparameterwert für Fokus oder Spur in den Speichermitteln (5, 8) abgespeichert wird.

3. Verfahren nach Anspruch 1 oder 2,
**dadurch gekennzeichnet, daß** als Speichermittel ein nichtflüchtiger Speicher (5) des Geräts oder eine auf einem nichtflüchtigen Datenträger (8) gespeicherte Datei verwendet wird.

4. Verfahren nach Anspruch 3,
**dadurch gekennzeichnet, daß** der nichtflüchtige Datenträger (8) extern von dem Gerät vorgesehen ist und
daß der Inhalt der Datei des nichtflüchtigen Datenträgers (8) in einen in dem Gerät vorgesehenen Speicher (5) übernommen wird, auf den in den Schritten b) und c) zugegriffen wird.

5. Verfahren nach einem der vorhergehenden Ansprüche,
**dadurch gekennzeichnet, daß** im Schritt a) als Tdentifizierungsinformation ein BCA-Datenbereich des optischen Aufzeichnungsträgers (1) gelesen wird.

6. Gerät zum Lesen oder Lesen und Beschreiben eines optischen Aufzeichnungsträgers,
wobei der Aufzeichnungsträger (1) den jeweiligen Aufzeichnungsträger individuell kennzeichnende Identifizierungsinformationen aufweist,
mit Erfassungsmitteln (2) zum Erfassen der Identifizierungsinformationen eines in das Gerät eingelegten Aufzeichnungsträgers (1),
mit Speichermitteln (5, 8) und Steuermitteln (4) zum individuellen Identifizieren des in das Gerät eingelegten Aufzeichnungsträgers (1) anhand der erfaßten Identifizierungsinformationen und zum Überprüfen, ob zu dem individuell identifizierten Aufzeichnungsträger (1) in den Speichermitteln (5, 8) mindestens ein Abgleichparameterwert für Fokus oder Spur des Geräts gespeichert ist,
wobei die Steuermittel (4) derart ausgestaltet sind, daß sie für den Fall, daß zu dem identifizierten Aufzeichnungsträger (1) ein Abgleichparameterwert in den Speichermitteln (5, 8) erkannt werden konnte, den Abgleichparameterwert aus den Speichermitteln (5, 8) auslesen und Lesemittel (2) des Geräts entsprechend dem gelesenen Abgleichparameterwert abgleichen, um über die Lesemittel (2) einen Datenbereich des Aufzeichnungsträgers (1) lesen zu können,
**dadurch gekennzeichnet, daß** die Erfassungsmittel so ausgestattet sind, daß sie die Identifizierungsinformation nach grober Fokussierung und vor Durchführung der Abgleichvorgänge bezüglich der Abgleichparameter für Fokus oder Spur des Geräts erfassen.

7. Gerät nach Anspruch 6,
**dadurch gekennzeichnet, daß** die Erfassungsmittel durch die Lesemittel (2) gebildet sind.

8. Gerät nach Anspruch 6 oder 7,
**dadurch gekennzeichnet, daß** die Steuermittel (4) derart ausgestaltet sind, daß sie für den Fall, daß in den Speichermitteln (5, 8) für den identifizierten Aufzeichnungsträger (1) kein Abgleichparameterwert erkannt werden konnte, einen Abgleich der Lesemittel (2) durchführen und für den identifizierten Aufzeichnungsträger (1) mindestens einen dem abgeglichenen Zustand der Lesemittel (2) entsprechenden Abgleichparameterwert in den Speichermitteln (5, 8) speichern.

9. Gerät nach einem der Ansprüche 6-8,
**dadurch gekennzeichnet, daß** die Speichermittel einen nichtflüchtigen Speicher (5) des Geräts oder einen extern von dem Gerät vorgesehenen nichtflüchtigen Datenträger (8) umfassen.

10. Gerät nach einem der Ansprüche 6-9,
**dadurch gekennzeichnet, daß** die Erfassungsmittel (2) derart ausgestaltet sind, daß sie als die den in das Gerät eingelegten Aufzeichnungsträger (1) individuell kennzeichnenden Identifizierungsinformationen einen BCA-Datenbereich des Aufzeichnungsträgers (1) lesen.

11. Gerät nach einem Ansprüche 6-10,
**dadurch gekennzeichnet, daß** das Gerät zum Lesen einer DVD-ROM-Platte (1) als optischer Aufzeichnungsträger ausgestaltet ist.

## Revendications

1. Méthode de production rapide d'une préparation de lecture d'un appareil de lecture ou de lecture et d'écriture sur un support d'enregistrement optique, le support d'enregistrement (1) comportant des éléments d'informations d'identification qui identifient de manière individuelle le support d'enregistrement respectif, comprenant les étapes de :
a) détection des éléments d'informations d'identification du support d'enregistrement (1) une fois que ce dernier a été inséré dans l'appareil, afin d'identifier de manière individuelle le support d'enregistrement,
b) vérification si, pour le support d'enregistrement (1) identifié de manière individuelle, au moins une valeur de paramètre de réglage pour un fonctionnement de l'appareil est stockée dans un moyen de stockage (5, 8) et
c) lecture de la valeur de paramètre de réglage à partir du moyen de stockage (5, 8), si la vérification effectuée à l'étape b) est positive, et réglage de l'appareil conformément à la valeur de paramètre de réglage lue, afin d'être en mesure de lire à partir d'une zone de données du support d'enregistrement (1),
**caractérisée en ce que** les informations d'identification sont détectées après une focalisation approximative et avant que des procédures de réglage relatives à des paramètres de réglage pour une focalisation ou un alignement de l'appareil ne soient réalisées.

2. Méthode selon la revendication 1, **caractérisée en ce que** dans le cas où la vérification effectuée à l'étape b) est négative, des procédures de réglage relatives à des paramètres de réglage pour une focalisation ou un alignement de l'appareil sont réalisées, et ensuite, pour le support d'enregistrement identifié (1), au moins une valeur de paramètre de réglage pour une focalisation ou un alignement de l'appareil correspondant à l'état de réglage de l'appareil est stockée dans le moyen de stockage (5, 8).

3. Méthode selon la revendication 1 ou 2, **caractérisée en ce qu'**une mémoire non volatile (5) de l'appareil ou un fichier stocké sur une porteuse de données non volatile (8) est utilisé(e) comme moyen de stockage.

4. Méthode selon la revendication 3, **caractérisée en ce que** la porteuse de données non volatile (8) est fournie de manière externe à l'appareil, et **en ce que** le contenu du fichier de la porteuse de données non volatile (8) est accepté dans une mémoire (5) qui est fournie dans l'appareil et est accessible aux étapes b) et c).

5. Méthode selon une des revendications précédentes, **caractérisée en ce que**, à l'étape a), une zone de données BCA du support d'enregistrement optique (1) est lue en tant qu'informations d'identification.

6. Appareil de lecture ou de lecture et d'écriture sur un support d'enregistrement optique, le support d'enregistrement (1) comportant des éléments d'informations d'identification qui identifient de manière individuelle le support d'enregistrement respectif,
l'appareil comportant un moyen de détection (2) pour détecter les éléments d'informations d'identification d'un support d'enregistrement (1) qui a été inséré dans l'appareil,
l'appareil comportant un moyen de stockage (5, 8) et un moyen de commande (4) pour identifier de manière individuelle le support d'enregistrement (1) qui a été inséré dans l'appareil à l'aide des éléments d'informations d'identification détectés, et pour vérifier si, pour le support d'enregistrement (1) identifié de manière individuelle, au moins une valeur de paramètre de réglage pour une focalisation ou un alignement de l'appareil est stockée dans le moyen de stockage (5, 8),
le moyen de commande (4) étant configuré de telle manière que, dans le cas où, pour le support d'enregistrement identifié (1), une valeur de paramètre de réglage a été en mesure d'être identifiée dans le moyen de stockage (5, 8), ledit moyen de commande lit la valeur de paramètre de réglage à partir du moyen de stockage (5, 8) et règle le moyen de lecture (2) de l'appareil conformément à la valeur de paramètre de réglage lue, afin d'être en mesure de lire à partir d'une zone de données du support d'enregistrement (1) via le moyen de lecture (2),**caractérisée en ce que** le moyen de détection est équipé pour détecter les informations d'identification après une focalisation approximative et avant que des procédures de réglage relatives à des paramètres de réglage pour une focalisation ou un alignement ne soient réalisées.

7. Appareil selon la revendication 6, **caractérisé en ce que** le moyen de détection est formé par le moyen de lecture (2).

8. Appareil selon les revendications 6 ou 7, **caractérisé en ce que** le moyen de commande (4) est configuré de telle manière que, dans le cas où, pour le support d'enregistrement identifié (1), il n'a pas été possible d'identifier une valeur de paramètre de réglage dans le moyen de stockage (5, 8), ledit moyen de commande effectue un réglage du moyen de lecture (2) et, pour le support d'enregistrement identifié (1), stocke dans le moyen de stockage (5, 8) au moins une valeur de paramètre de réglage correspondant à l'état de réglage du moyen de lecture (2).

9. Appareil selon une des revendications 6 à 8, **caractérisé en ce que** le moyen de stockage comprend une mémoire non volatile (5) de l'appareil ou une porteuse de données non volatile (8) fournie de manière externe à l'appareil.

10. Appareil selon une des revendications 6 à 9, **caractérisé en ce que** le moyen de détection (2) est configuré de telle manière qu'il lit une zone de données BCA du support d'enregistrement (1) en tant qu'éléments d'informations d'identification qui identifient de manière individuelle le support d'enregistrement (1) qui a été inséré dans l'appareil.

11. Appareil selon une des revendications 6 à 10, **caractérisé en ce que** l'appareil est configuré pour une lecture sur un disque DVD-ROM (1) en tant que support d'enregistrement optique.
